# EUROPEAN PATENT SPECIFICATION

(11) **EP 3 360 771 B1**
(45) Date of publication and mention of the grant of the patent: **15.07.2020**
(21) Application number: 17155653.3
(22) Date of filing: 10.02.2017
(51) Int. Cl.: B63B 59/08

(54) **INSPECTION VEHICLE**
INSPEKTIONSFAHRZEUG
VÉHICULE D'INSPECTION

(43) Date of publication of application: 15.08.2018
(73) Proprietor: ECOsubsea AS, 5397 Bekkjarvik (NO)
(72) Inventor: ØSTERVOLD, TOR MIKAL, 5397 BEKKJARVIK (NO); ØSTERVOLD, KLAUS, 5397 BEKKJARVIK (NO)
(74) Representative: Protector IP AS

(56) References cited:
- WO-A1-2005/056382
- WO-A1-2015/122780
- US-A1- 2010 219 003
- US-A1- 2012 006 352
- US-A1- 2014 076 223

## Description

### Field of the invention

The present invention relates to inspection of ship hulls and other structure. More specifically, the invention relates to inspection vehicle for underwater inspection of coating, marine growth, structural integrity and corrosion on ferromagnetic ship hulls and other ferromagnetic structures.

### Background of the invention and prior art

Coating protects ship hulls and other structures at sea and on shore. Deterioration of the coating on a structure enhances corrosion, which eventually deteriorates the structural integrity. Experience show that new coating systems, after tin was removed as a component from anti-foulings in 2008, are less effective, which may be a result of less effective but also less poisonous and health threatening antifouling agents or additives in recent years, since many substances and compositions have been prohibited or restricted.

Marine growth has a surprising large effect on fuel consumption of a ship. The friction of the hull increases with increasing extent of marine growth. The IMO (International Maritime Organization), a UN (United Nations) organization, indicates that 5 - 15 % of fuel can be saved by having a clean ship hull (Second GHG study 2009, section A2. 63). Other estimates indicate 15 %, 20 % or 18 % (over 60 months) savings, as estimated by Marintek, Propulsion Dynamic (tankers) and Jotun, respectively. In CASPER: The leading edge in vessel performance - Propulsion Dynamics, a saving of 10 -20 % is estimated.

The quality of the coating, the extent of corrosion and marine growth, and the effects thereof on structural integrity, and structural damages, can in principle be detected and more or less be quantified by visual inspection. Additional sensors and measurements may verify and quantify the findings. However, for a structure such as the hull of a ship at quay, the hull is apparently clean close to or at the waterline, since in many situations, no damages or changes can be identified by a simple visual control from sea level since the damages can be located at deeper level on the hull, not visible in a harbor with seawater of low visibility.

Typically, divers or ROVs (Remotely Operated Vehicles) must be hired in order to undertake a visual control, and in most harbors the service is not readily available. Equipment for inspection exists, but will often require an expert crew, electric power, a control container and often an additional vessel. The equipment is typically advanced, requiring experts for operation and interpretation of the results. Document US2014/0076223 shows such a known inspection vehicle.

A demand exists for an inspection tool easier to mobilize, which in practice will be used more frequently. A particular demand exist for equipment that is so light, compact and fast to operate that one or two operators alone can inspect ships when in harbor, such as when the ship is at quay, without delaying the period of stay. The objective of the present invention is to meet said demands.

### Summary of the invention

The invention provides an inspection vehicle for under water inspection of coating, marine growth, structural integrity and corrosion on ferromagnetic ship hulls and other ferromagnetic structures, above or below water. The inspection vehicle comprises:
a non-magnetic element,
at least one magnetic wheel or magnetic device operatively arranged to the element, and
a watertight camera for visual inspection attached to the element or other structure of the inspection vehicle,
one coupling side where the at least one magnetic wheel or device is operatively arranged for the inspection vehicle to couple magnetically through coating, any marine growth and corrosion products and allow rolling the inspection vehicle on said structure, in horizontal to vertical to upside down-orientation while holding the inspection vehicle attached to the structure,
one non-coupling side oriented in substance in opposite direction to the coupling side, where the at least one magnetic wheel or device is not operatively arranged and the non-coupling side will not couple magnetically to said structure.

The inspection vehicle is distinguished in that it further comprises a combination of an induction-based sensor and an ultrasound-based sensor, which combination measures lift-off from the ferromagnetic structure being inspected, coating thickness and quality, thickness and type of marine growth and thickness of ferromagnetic wall or hull.

Preferably, the non-magnetic element is single concave or double concave.

Preferably, the magnetic wheel or magnetic device is a magnetic wheel, as discussed and specified in detail below. However, as an alternative or in addition, also magnetic devices being not a wheel per se but being arranged so as to couple magnetically, can be included. For example, the device is a magnet, not rotating but arranged between or medially at the side of non-magnetic wheel with a lift off from the surface being inspected of for example 2-3 mm. Such magnetic devices are preferably electromagnets or permanents magnets for which the magnetism can be turned off, as discussed below.

Preferably, the inspection vehicle comprises at least two magnetic wheels arranged apart to the non-magnetic element. The inspection vehicle may comprise one, two, three or more non-magnetic wheels, the number of magnetic wheels can be increased if required, by replacing non-magnetic wheels.

Preferably, the non-magnetic element is one of:
a concave shell structure,
a concave shell structure that is in substance circular,
a concave shell structure that is in substance elongated,
a concave shell structure that is in substance circular or elongated, wherein the magnetic wheels are encompassed by said shell structure, the wheels extending out from the shell structure only on a coupling side, being an underside of the inspection vehicle to face and attach to the inspected structure during operation, preferably said shell structure also extends laterally around at least the magnetic wheels,
a curved beam with the concave side to face outwards from the inspected structure during inspection,
a curved beam with the concave side to face outwards from the inspected structure during operation, wherein the beam is one of elongated and equidistant with respect to length and width, preferably said curved beam also extends laterally around at least the magnetic wheels,
a curved truss-structure with the concave side to face outwards from the inspected structure during operation,
a curved truss-structure with the concave side to face upwards from the inspected structure during operation, wherein the curved truss structure is one of elongated and equidistant with respect to length and width, preferably said curved truss-structure also extends laterally around at least the magnetic wheels,
a concave shell structure, beam structure or truss structure,
a concave shell structure, beam structure or truss structure, encompassing at least the magnetic wheels , and having curvature or concavity so that when the inspection vehicle hangs along a vertical ship hull side the center of gravity is at elevation below a midpoint between the at least two axially apart wheels, preferably the lower elevation wheels are larger in number and/or weight than the higher elevation wheel when the inspection vehicle hangs along a vertical ship hull .

Preferably, the inspection vehicle comprises a watertight camera with live-feed functionality. All cameras, sensors, lights and devices operatively arranged to or integrated into the inspection vehicle of the invention are watertight at least down to the depth elevation for intended operation.

Preferably, the inspection vehicle comprises one or more of, in any combination:
a sensor for measuring coating and marine growth thickness, preferably the sensor is an inductance based sensor,
a sensor for measuring the thickness of a hull or other structure being inspected, such as a tank wall thickness, a pipe wall thickness or a vessel hull thickness, preferably the sensor is an ultrasound based sensor,
a means for placing out sensors or other equipment, such as a solenoid-operated release mechanism holding the sensor or equipment until a release position is reached,
a light, and
a combination of an induction based sensor, such as an eddy current sensor, and an ultrasound-based sensor, which combination measures lift-off from the ferromagnetic structure being inspected, coating thickness, marine growth thickness and type and ferromagnetic structure wall or hull thickness.

Preferably, the sensor or sensors are spring-loaded sensor integrated in a concave structure arranged to slide on the structure to be inspected, or is arranged into a wheel or arranged to or into a shaft between wheels. Alternatively, some or all sensors of the inspection vehicle are arranged at a distance from the structure to be inspected, preferably a known and fixed distance.

The lift-off from the ferromagnetic structure being inspected, is the sum of coating thickness and marine growth thickness and optional corrosion, said lift-off can be measured precisely with an inductance based sensor, such as an eddy current sensor. By using an ultrasound based sensor, sometimes called ultrasou8nd probe or UT probe, and knowing the precise lift-off; coating thickness, marine growth thickness, corrosion, coating quality and type of marine growth can be determined based on differences in ultrasound velocity and reflexes. Preferably, a multi-source ultrasound probe is used, similar to the probes used for medical purposes, since the resolution and detail level is higher than for ultrasound probes used traditionally in non-destructive testing and examination.

The inspection vehicle preferably comprises a rope or a combined rope and cable in an upper end of the vehicle as seen when the vehicle hangs along a vertical ship hull side, preferably a rope or line combining handling and communication and preferably also power and control, as a bundle or a single umbilical.

The inspection vehicle preferably comprises wheels with a drive mechanism, preferably electric drive and a battery integrated in or power via a cable attached to the inspection vehicle, preferably including a steering function, such as steerable wheels or a steerable hinge on the inspection vehicle, and preferably a device for steering, such as a joystick. Waterproof drive and control mechanisms of radio or cable controlled cars or vehicles are possible features of such embodiments.

The inspection vehicle preferably comprises wheels and/or structure that are wider and/or heavier in a lower end of the inspection vehicle than in an upper end of the inspection vehicle, as seen with the inspection vehicle hanging along and attached to a vertical hull side. This provides easier lowering and orientation.

The inspection vehicle preferably comprises a position or motion sensor, such as a gyro sensor and/or accelerometers, preferably also a GPS sensor, and associated software either in the inspection vehicle or in a control computer or similar operatively connected by cable or wireless, or writing to a storage, arranged to document the position and motions at all time during an inspection run.

The inspection vehicle preferably weights less than 25 kg and having no dimension larger than 1 m as packed in an operations container, to allow transport, handling and operation by one single operator. Preferably, the vehicle weights about 5 to 25 kg, preferably about 10 kg in air and about 3 to 20 kg, preferably about 7 kg in water. The magnetic wheels per se, in one embodiment, have about 155 kg magnetic coupling force on the flat side (without paint on the hull) and having a diameter of about 0,1 m and a wheel width of about 1,5 cm. A typical inspection vehicle of the invention is about 50 cm long, 20 cm wide and about 20 cm high.

However, the inspection vehicle preferably is designed so that the wheels never can couple to the structure with the flat side, by the magnetic wheels comprising a lateral protrusion and/or by arranging magnetic wheels between non-magnetic wheels. The protrusion are for example half-ball-shaped rubber structures, preventing the inspection vehicle to tip over lying flat with one, two or more magnetic wheels fastened hard to the hull. However, most preferably the non-magnetic element has shape preventing magnetic coupling laterally to the at least one magnetic wheel, by having the non-coupling side structure designed to cover and mask said wheel or wheels laterally but no towards the coupling side.

The invention also provides a method for under water inspection of coating, marine growth, structural integrity and corrosion on ferromagnetic ship hulls and other ferromagnetic structures, using an inspection vehicle according to the invention. The method comprises the steps:
to start recording with the camera,
to lower the inspection vehicle down the inspected structure and below the surface, while the inspection vehicle hangs in a rope/cable, by letting out rope/cable, until the desired depth or position has been reached.

The method is distinguished by further comprising the steps: to measure the lift-off from the ferromagnetic structure being inspected, by an induction-based sensor, which lift off is the sum of coating thickness and marine growth thickness and optional corrosion, and using an ultrasound based sensor, knowing the lift-off, for providing information on coating thickness and quality, thickness and type of marine growth and thickness of ferromagnetic wall or hull, based on differences in ultrasound velocity and reflexes, and
to repeat the steps at desired positions for inspection.

Preferably, video footage is recorder by the camera, the rope/cable comprises distance marks, which distance marks are used for depth control, or using depth gauge, digital or manual, optionally sensors integrated in the inspection vehicle.

Preferably, a line/cable can be or is attached in either end of the inspection vehicle, the lines are used to keel-draw the inspection vehicle around the hull at desired positions.

The invention also provides application or use of the inspection vehicle of the invention, for providing information for deciding to clean a ship hull sufficiently often to provide a fuel saving of typical up to 5-20 % and resulting corresponding reduced emission of greenhouse gases (GHG).

The above definition of the inspection vehicle implies that the non-magnetic element is made of a non-magnetic material so as not to attach magnetically to a ferromagnetic structure per se or as assembled with the magnetic wheels as part of the inspection vehicle.

Non-magnetic material, in the context of non-magnetic element, means non-magnetized material, per se or as assembled with the magnetic wheels as part of the inspection vehicle. Accordingly, the non-magnetic element can be made of carbon steel or other ferromagnetic material so long as it cannot be magnetized to couple to the ferromagnetic structure to be inspected as operatively integrated in the inspection vehicle.

In principle, the inspection vehicle of the invention comprises only one coupling side, which means only one side coupling magnetically to the structure to be inspected. Depending on the design, the inspection vehicle comprises 1, 2, 3, 4 or 5 non-coupling sides, meaning sides not coupling magnetically to the structure to be inspected. A design where the inspection vehicle has shape in substance as a cube or elongated cube comprises 5 non-coupling sides. A design where the inspection vehicle has shape in substance as a double concave shell or shell-like structure over the coupling side, has only one non-coupling side. Intermediate shapes in between cube-like shape and double concave shell-like shape gives 2-4 non-coupling sides, all such shapes represents embodiments of the inspection vehicle of the invention. One example is an inspection vehicle with two or three concave and/or double concave non-coupling sides and one coupling side.

Inspection of ship hulls under water implies that the ship is at quay or other location floating on water, contrary to laying out of service in a dry dock. The term magnetic wheels means permanent magnet wheels or electromagnetic wheels. A permanent magnet wheel is a wheel comprising permanent magnetic material, the resulting magnetism is permanent or can be turned on and off, preferably the magnetism can be turned on and off, at the wheel or through a cable connected to the inspection vehicle. An electromagnetic wheel comprises an electromagnet, the magnetism can be turned on and off by turning an electric current through the electromagnet on and off. The inspection vehicle comprises 1, 2, 3 or 4 or more magnetic wheels. The magnetic wheels can be permanent magnet wheels, electromagnetic magnet wheels or any combinations of permanent magnet wheels and electromagnetic wheels.

The magnetic coupling, provided with the magnetic wheels, provides a magnetic coupling force attaching and holding the inspection vehicle to the structure being inspected.

For inspection under water or immersed in other liquid, the magnetic coupling force is preferably in a range from 0.5 to 2 times, more preferably 1 to 1.5 times, such as 1.3 times the weight of the inspection vehicle as immersed.

For inspection above water, in air or other gas, the magnetic coupling force is preferably in a range from 0.5 to 2 times, more preferably 1 to 1.5 times, such as 1.3 times the weight of the inspection vehicle in air.

For inspection in upside-down positions, the holding force must be above 1 times the weight of the inspection vehicle at the actual position, be it under water or above water. For inspection in vertical and horizontal positions, the holding force can be below 1 times the weight of the inspection vehicle at the actual position, be it under water or above water.

Preferably, the magnetic coupling and the resulting magnetic coupling force is adjustable. Adjustment for electromagnetic wheels are by adjusting the electric current from 0 and 0 coupling force up to a maximum coupling force exceeding the weight of the inspection vehicle in the actual position, be it under water or above water. Adjustment for permanent magnet wheels are by manipulating the wheels mechanically, on the inspection vehicle or through an electric cable, using a solenoid switch or mechanic switch or a similar device, between on and off and preferably with one or more coupling force steps in between.

The inspection vehicle preferably comprises a rope or line combining handling and communication, and preferably also power and control, as a bundle or single rope or line or umbilical.

Preferably, the coupling side of the inspection vehicle is convex.

Preferably, the coupling side of the inspection vehicle is convex and the non-coupling side is concave.

The camera is a film camera or a still picture camera, or a camera shooting both still pictures and film. The camera can be started when lowering of the inspection vehicle starts, or the camera can be remotely controlled. The camera preferably comprises a battery, requiring no external power. Alternatively, the camera, and preferably also sensors and light, are powered and/or controlled by cable, integrated into or fastened to the cable used for lowering the vehicle. Preferably, the camera is a commercially available film camera arranged into or comprising a watertight housing. The camera distance from the object is preferably equal to or larger than the minimum focus distance of the camera, for example 20 cm.

The inspection vehicle preferably comprises lugs or ears for fastening of ropes, lines or similar in either end.

The magnetic wheels are for example 0,05-0,15 m in diameter. Double or treble magnetic wheels can be mounted on the vehicle if required for sufficiently strong magnetic coupling to the hull, for example if a hull surface has many thick layers of paint and/or extensive marine growth.

Testing has verified that the above parameters are feasible for having an operable inspection vehicle that will attach to and roll over the hull even if severe marine growth is encountered. The inspection vehicle will move over obstacles, be it soft or hard marine growth or details on the hull, and allow increased lift off from the hull plates due to layers of marine growth, while still attaching to the hull. The curvature of concave and convex surfaces can easily be followed. For many embodiments, no external power supply is needed. The inspection vehicle can easily be transported in a case by one person and be operated by one person, providing swift mobilization and use and providing the results live or immediately after operation. The ropes, wires or lines attached to the vehicle should be strong enough to draw loose the vehicle in any foreseeable situation.

### Figure

The inspection vehicle of the invention is illustrated by 7 figures, namely
Figure 1A and 1B, illustrating one of many possible embodiments of an inspection vehicle of the invention, as seen from the side and from above, respectively,
Figure 2 illustrating another embodiment of the inspection vehicle of the invention,
Figure 3 illustrating a further embodiment of an inspection vehicle of the invention, as hanging down a ship hull side,
Figures 4 and 5 illustrate an embodiment of magnetic wheels, and
Figures 6 and 7 illustrate an embodiment of magnetic devices.

### Detailed Description

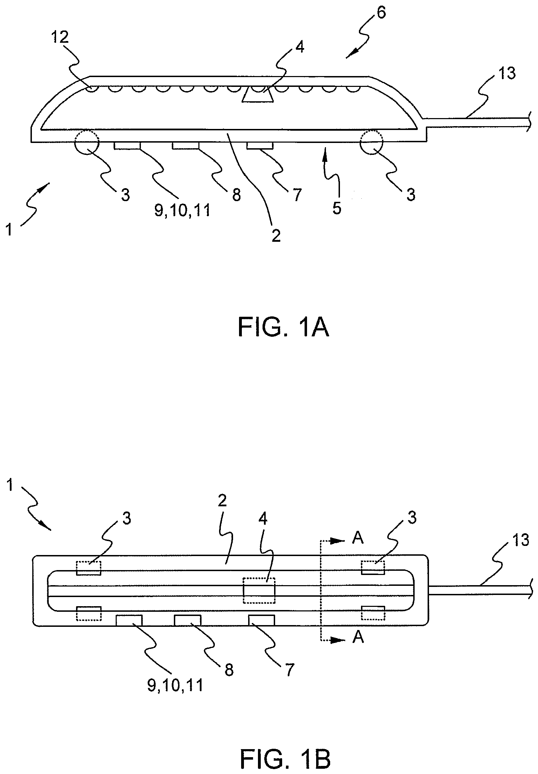

Reference is made to Figure 1A and 1B, illustrating an inspection vehicle of the invention, as seen from the side and from above, respectively. More specifically, the inspection vehicle (1) for under water inspection of coating, marine growth, structural integrity and corrosion on ferromagnetic ship hulls and other ferromagnetic structures, above and below water comprises a non-magnetic element (2), at least one magnetic wheel (3) operatively arranged to the element, and a watertight camera (4) for visual inspection attached to the element or other structure of the inspection vehicle. The inspection vehicle further comprises one coupling side (5) where the at least one magnetic wheel is operatively arranged for the inspection vehicle to couple magnetically and allow rolling the inspection vehicle on said structure, through coating, marine growth and corrosion, in horizontal to vertical to upside down-orientation while holding the inspection vehicle attached to the structure; and one non-coupling side (6) oriented in substance in opposite direction to the coupling side, where the at least one magnetic wheel is not operatively arranged and the non-coupling side will not couple magnetically to said structure. The inspection vehicle also comprises sensors 7,8 and means 9 for placing out and retrieving sensors or other equipment, position or motion sensor 10, GPS sensor 11, light 12, for example a LED light rail, and a rope 13 for combined handling/lowering, power, control and communication.

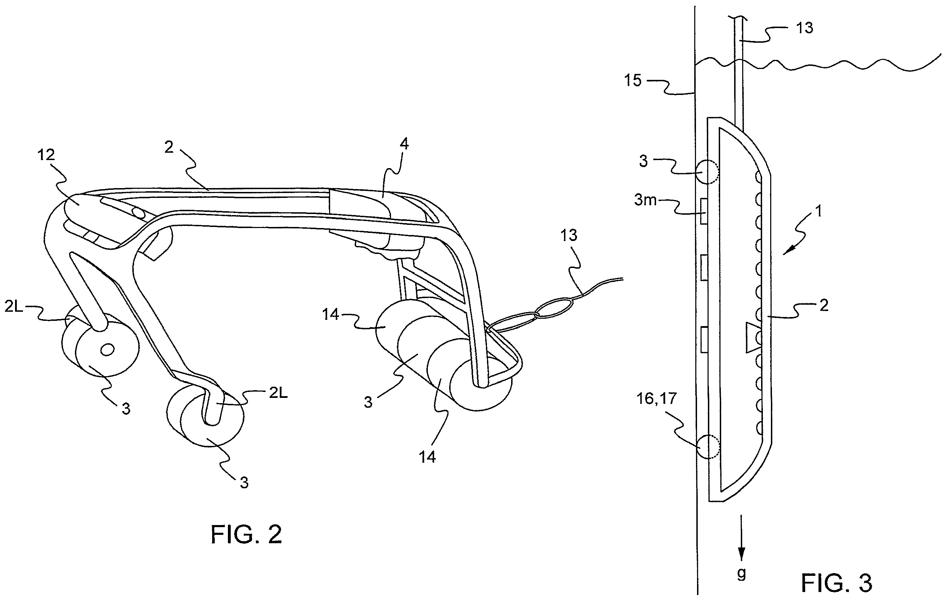

Figure 2 illustrates a further embodiment of an inspection vehicle 1 of the invention, wherein the non-magnetic element 2 is a concave beam structure. In a lower end, as seen when hanging down a ship hull side, two magnetic wheels 3 are laterally protected from attaching to the structure to be inspected by structure 2L of the non-magnetic element 2. The concavity or curvature of the non-magnetic element is "inclined downwards", which provides a center of gravity closer to the lower end than the upper end when the inspection vehicle hangs from a rope 13 in the upper end. The height of the illustrated inspection vehicle is not to scale but is exaggerated, to see the details thereof clearer. In the upper end a magnetic wheel 3 is arranged in between non-magnetic wheels 14, preventing lateral coupling by the magnetic wheel 3 in between.

Figure 3 illustrates a further embodiment of the inspection vehicle 1 and the method of the invention. More specifically, the further inspection vehicle 1 embodiment comprises a shell-like concave structure as non-magnetic element 2 and the inspection vehicle is illustrated as rolling down a ship hull side 15, lowered with a rope or line 13, helped by gravity g. A drive mechanism 16, and optionally a steering mechanism 17, can be included, and will help in deploying the inspection vehicle further under the hull towards and optionally beyond the keel. A magnetic device 3m is illustrated.

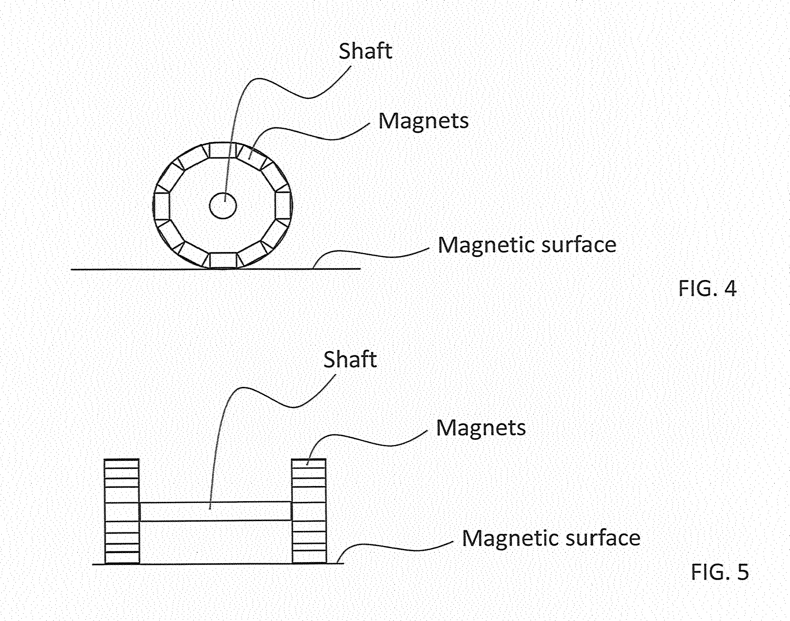

Figures 4 and 5 illustrate an embodiment of magnetic wheels, more specifically as seen from the side and from a front position. Pieces of permanent magnets are arranged regularly along the periphery of otherwise non-magnetic wheels.

The permanent magnet pieces extend as far out in radial direction of the wheel as non-magnetic parts, which improves wear resistance. Alternatively, the magnetic pieces extend 0-3 mm less in radial direction than the non-magnetic parts of the wheel.

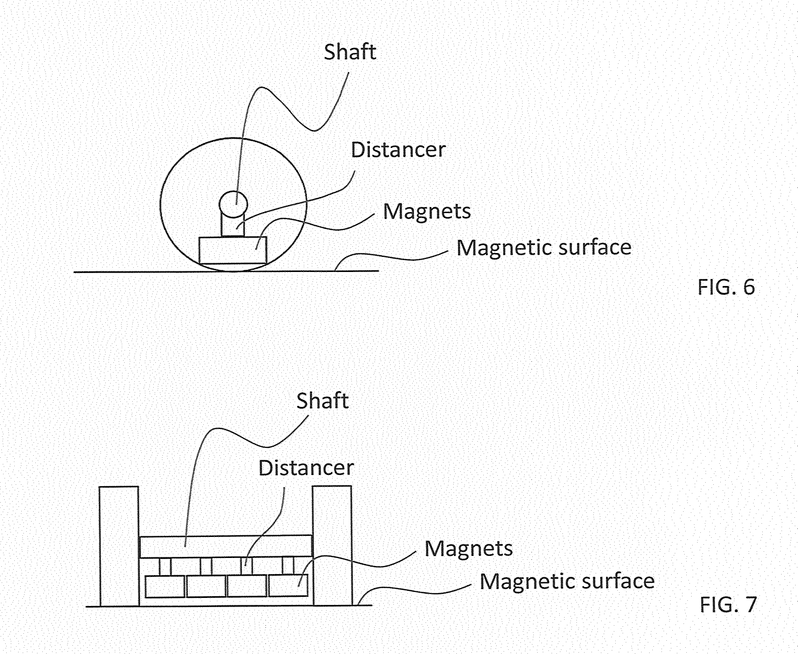

Figures 6 and 7 illustrate an embodiment of magnetic devices, as seen from the side and from a front position. The magnetic devices are preferably non-rotatable permanent magnet pieces, they are easy to take in our out for adjusting magnetic coupling force or cleaning for any magnetic debris. Magnetic coupling force is adjusted by adjusting the number and/or type of magnetic devices used in the inspection vehicle.

Double magnet wheels, or even triple magnet wheels, and/or magnetic wheels with adjustable magnetic coupling force, can be used if increased magnetic coupling is required.

The invention provides an inspection vehicle for under water inspection of ship hulls and other ferromagnetic structures, but also non-ferromagnetic structures that are orientated upwards from gravity, allowing inspection even without magnetic coupling.

The inspection vehicle is distinctive in that it merely may consists of a non-magnetic element, at least one magnetic wheel arranged operatively to said element, and a watertight camera for visual inspection of coating, marine growth, structural integrity and corrosion of the structure being inspected, in addition to optional sensors and light. The inspection vehicle has a size and weight making it easy for one person to operate and transport the inspection vehicle. Said non-magnetic element is preferably convex or double convex, at an extent making it impossible for the inspection vehicle of the invention to attach itself to a ship hull or other ferromagnetic structure to be inspected when at upside-down orientation or sideways orientation relative to the hull or structure to be inspected. In contrast to the comprehensive prior art systems, requiring a team of personnel and typically a container full of equipment, only one or two persons are required for operation.

The inspection vehicle of the invention and the method of the invention provide an easier and more cost effective way of deciding inter alia the existence and extent of marine growth on a hull, and whether or not to remove said growth. One person can operate the inspection vehicle when a ship is at a harbor in ordinary operation. The invention has a significant positive effect on the environment, since convenient removal of marine growth reduces fuel consumption of ships significantly.

The inspection vehicle of the invention can have numerous embodiments, including any combination of features here described or illustrated. The method of the invention can include any feature or step as here described or illustrated, in any operative combination.

## Claims

1. Inspection vehicle (1) for under water inspection of coating, marine growth, structural integrity and corrosion on ferromagnetic ship hulls and other ferromagnetic structures wherein the inspection vehicle comprises:
a non-magnetic element (2),
at least one magnetic wheel (3) or magnetic device operatively arranged to the element, and
a watertight camera (4) for visual inspection attached to the element or other structure of the inspection vehicle,
one coupling side (5) where the at least one magnetic wheel or device is operatively arranged for the inspection vehicle to couple magnetically through coating, any marine growth and corrosion products and allow rolling the inspection vehicle on said structure, in horizontal to vertical to upside down-orientation while holding the inspection vehicle attached to the structure, and
one non-coupling side (6) oriented in substance in opposite direction to the coupling side, where the at least one magnetic wheel or device is not operatively arranged and the non-coupling side will not couple magnetically to said structure, wherein the inspection vehicle further comprises a combination of an induction-based sensor (8) and an ultrasound-based sensor (9), **characterised in that** the combination of an induction-based sensor (8) and an ultrasound-based sensor (9) is adapted to measure lift-off from the ferromagnetic structure being inspected, coating thickness and quality, thickness and type of marine growth and thickness of ferromagnetic wall or hull.

2. Inspection vehicle according to claim 1, comprising
a connector end, where a rope or line combining handling and communication, and preferably also power and control, is connected as a bundle or a single rope or line or umbilical,
at least two axially apart wheels, wherein the wheels remote from the connector end are larger in number and/or weight than the wheels near to the connector end, providing a center of gravity closer to the end remote from the connector end.

3. Inspection vehicle according to claim 1 or 2, wherein it comprises at least two magnetic wheels arranged apart to the non-magnetic element.

4. Inspection vehicle according to claim 1, wherein the non-magnetic element comprises :
a concave shell structure, beam structure or truss structure, preferably encompassing the magnetic wheels laterally, and having curvature or concavity so that when the inspection vehicle hangs along a vertical ship hull side the center of gravity is at elevation below a midpoint between the at least two axially apart wheels, preferably the lower elevation wheels are larger in number and/or weight than the higher elevation wheel when the inspection vehicle hangs along a vertical ship hull .

5. Inspection vehicle according to claim 1, wherein the inspection vehicle comprises one or more of, in any combination:
a means (9) for placing out sensors or other equipment, such as a solenoid-operated release mechanism holding the sensor or equipment until a release position is reached,
a light (12), and
a non-magnetic element that is single or double concave, encompassing the at least one magnetic wheel or device.

6. Inspection vehicle according to claim 1, comprising one or more wheels with a drive mechanism (16).

7. Inspection vehicle according to claim 1, comprising a position or motion sensor (10), preferably also a GPS sensor (11), and associated software, arranged to document the position and motions at all time during an inspection run.

8. Method for under water inspection of coating, marine growth, structural integrity and corrosion on ferromagnetic ship hulls and other ferromagnetic structures, using an inspection vehicle according to any one of claim 1-7, the method comprises the steps:
to start recording with the camera,
to lower the inspection vehicle down the inspected structure and below the surface, while the inspection vehicle hangs in a rope/cable, by letting out rope/cable, until the desired depth or position has been reached, **characterised in that** method comprises the steps to measure the lift-off from the ferromagnetic structure being inspected, by an induction-based sensor, which lift off is the sum of coating thickness and marine growth thickness and optional corrosion, and using an ultrasound based sensor, knowing the lift-off, for providing information on coating thickness and quality, thickness and type of marine growth and thickness of ferromagnetic wall or hull, based on differences in ultrasound velocity and reflexes, and
to repeat the steps at desired positions for inspection.

9. Method according to claim 8, comprising to inspect during the length of run along the structure or at predetermined positions for one or more of: structural integrity, structure wall thickness; and optionally to adjust the magnetic coupling force.

## Patentansprüche

1. Inspektionsfahrzeug (1) zur Unterwasserinspektion von Beschichtungen, marinem Bewuchs, Strukturintegrität und Korrosion an ferromagnetischen Schiffsrümpfen und anderen ferromagnetischen Strukturen, wobei das Inspektionsfahrzeug Folgendes umfasst:
ein nicht-magnetisches Element (2),
mindestens ein magnetisches Rad (3) oder eine magnetische Vorrichtung, die an dem Element funktionell angeordnet ist, und
eine wasserdichte Kamera (4) zur visuellen Inspektion, die an dem Element oder einer anderen Struktur des Inspektionsfahrzeugs angebracht ist,
eine gekoppelte Seite (5), an der das mindestens eine magnetische Rad oder die mindestens eine Magnetvorrichtung funktionell angeordnet ist, um das Inspektionsfahrzeug durch die Beschichtung, etwaigen marinen Bewuchs und Korrosionsprodukte hindurch magnetisch zu koppeln und Rollen des Inspektionsfahrzeugs auf der Struktur von der horizontalem Richtung in die vertikale Richtung und von oben nach unten zu ermöglichen, während das Inspektionsfahrzeug an der Struktur befestigt gehalten wird, und
eine nicht gekoppelte Seite (6), die im Wesentlichen in entgegengesetzter Richtung zur gekoppelten Seite ausgerichtet ist, an der das mindestens eine magnetische Rad oder die magnetische Vorrichtung nicht funktionell angeordnet ist und an der die nicht gekoppelte Seite nicht magnetisch an die Struktur gekoppelt ist, wobei das Inspektionsfahrzeug ferner eine Kombination aus einem induktionsbasierten Sensor (8) und einem ultraschallbasierten Sensor (9) umfasst, **dadurch gekennzeichnet, dass** die Kombination aus einem induktionsbasierten Sensor (8) und einem ultraschallbasierten Sensor (9) dazu ausgelegt ist, um eine Ablösung von der inspizierten ferromagnetischen Struktur, Beschichtungsdicke und -qualität, Dicke und Art des marinen Bewuchses und Dicke der ferromagnetischen Wand oder des Rumpfes zu messen.

2. Inspektionsfahrzeug nach Anspruch 1, umfassend
ein Verbinderende, an dem ein Seil oder eine Leitung, die Handhabung und Kommunikation und vorzugsweise auch Stromversorgung und Steuerung kombiniert, als ein Bündel oder ein einzelnes Seil oder eine einzelne Leitung oder Schnur angeschlossen ist,
mindestens zwei axial beabstandete Räder, wobei die von dem Verbinderende beabstandeten Räder hinsichtlich Anzahl und/oder Gewicht größer sind als die Räder in der Nähe des Verbinderendes, die einen Schwerpunkt näher an dem von dem Verbinderende entfernten Ende bereitstellen.

3. Inspektionsfahrzeug nach Anspruch 1 oder 2, wobei es mindestens zwei magnetische Räder umfasst, die von dem nichtmagnetischen Element beabstandet angeordnet sind.

4. Inspektionsfahrzeug nach Anspruch 1, wobei das nichtmagnetische Element umfasst:
eine konkave Schalen-, Balken- oder Fachwerkstruktur, die vorzugsweise die magnetischen Räder seitlich umschließt und mit einer Krümmung oder Konkavität, so dass, wenn das Inspektionsfahrzeug entlang einer vertikalen Schiffsrumpfseite hängt, der Schwerpunkt auf einer Höhe unterhalb eines Mittelpunktes zwischen den mindestens zwei axial beabstandeten Rädern liegt, wobei vorzugsweise die weniger hoch liegenden Räder hinsichtlich Anzahl und/oder Gewicht größer sind als das höher liegende Rad, wenn das Inspektionsfahrzeug entlang eines vertikalen Schiffsrumpfs hängt.

5. Inspektionsfahrzeug nach Anspruch 1, wobei das Inspektionsfahrzeug eines oder mehrere der folgenden Merkmale in beliebiger Kombination umfasst:
ein Mittel (9) zum außen Anbringen von Sensoren oder anderem Gerät, wie z. B. einem solenoidbetriebenen Lösemechanismus, der den Sensor oder das Gerät hält, bis eine Löseposition erreicht ist,
ein Licht (12), und
ein nicht-magnetisches Element, das einfach oder doppelt konkav ist und das mindestens ein magnetisches Rad oder Gerät umschließt.

6. Inspektionsfahrzeug nach Anspruch 1, umfassend ein oder mehrere Räder mit einem Antriebsmechanismus (16).

7. Inspektionsfahrzeug nach Anspruch 1, umfassend einen Positions- oder Bewegungssensor (10), vorzugsweise auch einem GPS-Sensor (11), und zugehöriger Software, die so angeordnet sind, dass sie die Position und die Bewegungen während einer Inspektionsfahrt jederzeit dokumentieren.

8. Verfahren zur Unterwasserinspektion von Beschichtung, marinem Bewuchs, Strukturintegrität und Korrosion an ferromagnetischen Schiffsrümpfen und anderen ferromagnetischen Strukturen unter Verwendung eines Inspektionsfahrzeugs nach einem der Ansprüche 1 bis 7, wobei das Verfahren die Schritte umfasst:
Starten der Aufzeichnung mit der Kamera,
Absenken des Inspektionsfahrzeugs an der zu inspizierenden Struktur und unter die Oberfläche, während das Inspektionsfahrzeug an einem Seil/Kabel hängt, durch Herauslassen des Seils/Kabels, bis die gewünschte Tiefe oder Position erreicht ist,
**dadurch gekennzeichnet, dass** das Verfahren die Schritte zum Messen der Ablösung von der untersuchten ferromagnetischen Struktur durch einen induktionsbasierten Sensor umfasst, wobei die Ablösung die Summe der Beschichtungsdicke und der Dicke des marinen Bewuchses und der optionalen Korrosion ist, und unter Verwendung eines ultraschallbasierten Sensors, der die Ablösung erfasst, zum Bereitstellen von Informationen über die Beschichtungsdicke und - qualität, die Dicke und die Art von marinen Bewuchs und die Dicke der ferromagnetischen Wand oder des Schiffsrumpfes auf Basis von Unterschieden in der Ultraschallgeschwindigkeit und den Reflexionen, und
Wiederholen der Schritte an gewünschten Stellen zur Inspektion.

9. Verfahren nach Anspruch 8, umfassend die Inspektion während des Fahrtverlaufs entlang der Struktur oder an vorbestimmten Stellen eines oder mehrerer der folgenden Merkmale: Strukturintegrität, Strukturwanddicke; und gegebenenfalls Einstellen der magnetischen Kopplungskraft.

## Revendications

1. Véhicule d'inspection (1) pour une inspection sous l'eau du revêtement, de la croissance marine, de l'intégrité structurelle et de la corrosion sur des coques de navire ferromagnétiques et d'autres structures ferromagnétiques, dans lequel le véhicule d'inspection comprend :
un élément non magnétique (2),
au moins une roue magnétique (3) ou au moins un dispositif magnétique agencé de manière opérationnelle par rapport à l'élément, et
une caméra étanche à l'eau (4) pour une inspection visuelle fixée à l'élément ou à une autre structure du véhicule d'inspection,
un côté d'accouplement (5) où la au moins une roue magnétique ou le au moins un dispositif magnétique est agencé de manière opérationnelle pour que le véhicule d'inspection se couple magnétiquement à travers le revêtement à tout produit de croissance marine et de corrosion et permette de faire rouler le véhicule d'inspection sur ladite structure, dans une orientation horizontale à verticale vers une orientation renversée tout en maintenant le véhicule d'inspection attaché à la structure, et
un côté sans couplage (6) orienté en substance dans une direction opposée au côté de couplage, où la au moins une roue magnétique ou le au moins un un dispositif magnétique n'est pas agencé(e) de manière opérationnelle et le côté sans couplage ne se couplera pas magnétiquement à ladite structure, dans lequel
le véhicule d'inspection comprend en outre une combinaison d'un capteur à induction (8) et d'un capteur à ultrasons (9), **caractérisé en ce que** la combinaison d'un capteur à induction (8) et d'un capteur à ultrasons (9) est adaptée pour mesurer un décollement à partir de la structure ferromagnétique inspectée, l'épaisseur et la qualité du revêtement, l'épaisseur et le type de croissance marine et l'épaisseur de la paroi ou de la coque ferromagnétique.

2. Véhicule d'inspection selon la revendication 1, comprenant
une extrémité de connecteur, où un câble ou une ligne combinant manipulation et communication, et de préférence également alimentation et commande, est connecté(e) sous la forme d'un faisceau ou d'un câble ou d'une ligne unique ou d'un câble ombilical,
au moins deux roues axialement espacées, dans lequel les roues éloignées de l'extrémité de connecteur sont supérieures en nombre et/ou en poids aux roues proches de l'extrémité de connecteur, en offrant un centre de gravité plus proche de l'extrémité éloignée de l'extrémité de connecteur.

3. Véhicule d'inspection selon la revendication 1 ou 2, dans lequel il comprend au moins deux roues magnétiques agencées à l'écart de l'élément non magnétique.

4. Véhicule d'inspection selon la revendication 1, dans lequel l'élément non magnétique comprend :
une structure de coque concave, une structure de poutre ou une structure en treillis, englobant de préférence les roues magnétiques latéralement, et ayant une courbure ou une concavité de sorte que lorsque le véhicule d'inspection est suspendu le long d'un côté vertical de la coque du navire, le centre de gravité est à une élévation au-dessous d'un point médian entre les au moins deux roues séparées axialement, de préférence les roues d'élévation inférieure sont supérieures en nombre et/ou en poids à la roue d'élévation supérieure lorsque le véhicule d'inspection est suspendu le long d'une coque de navire verticale.

5. Véhicule d'inspection selon la revendication 1, dans lequel le véhicule d'inspection comprend un ou plusieurs parmi, dans n'importe quelle combinaison :
des moyens (9) pour poser des capteurs ou un autre équipement, tel qu'un mécanisme de déclenchement actionné par solénoïde maintenant le capteur ou l'équipement jusqu'à ce qu'une position de déclenchement soit atteinte,
une lumière (12), et
un élément non magnétique concave simple ou double, englobant la au moins une roue magnétique ou les au moins un dispositif magnétique.

6. Véhicule d'inspection selon la revendication 1, comprenant une ou plusieurs roues avec un mécanisme d'entraînement (16).

7. Véhicule d'inspection selon la revendication 1, comprenant un capteur de position ou de mouvement (10), de préférence également un capteur GPS (11), et un logiciel associé, agencés pour documenter la position et les mouvements à tout moment pendant un cycle d'inspection.

8. Méthode pour une inspection sous l'eau du revêtement, de la croissance marine, de l'intégrité structurelle et de la corrosion sur des coques de navire ferromagnétiques et d'autres structures ferromagnétiques, en utilisant un véhicule d'inspection selon l'une quelconque des revendications 1 à 7, la méthode comprend les étapes consistant à :
commencer un enregistrement avec la caméra,
abaisser le véhicule d'inspection le long de la structure inspectée et sous la surface, tandis que le véhicule d'inspection est suspendu à une corde/câble, en laissant sortir la corde/le câble jusqu'à ce que la profondeur ou la position souhaitée soit atteinte, **caractérisé en ce que** la méthode comprend les étapes consistant à mesurer le décollement de la structure ferromagnétique inspectée, par un capteur à induction, lequel décollement est la somme de l'épaisseur du revêtement et de l'épaisseur de croissance marine et de la corrosion facultative, et en utilisant un capteur à ultrasons, en connaissant le décollement, pour fournir des informations sur l'épaisseur et la qualité du revêtement, l'épaisseur et le type de croissance marine et l'épaisseur de la paroi ou de la coque ferromagnétique, sur la base de différences de vitesse et de reflets des ultrasons, et
répéter les étapes aux positions souhaitées pour l'inspection.

9. Méthode selon la revendication 8, comprenant l'inspection pendant la longueur du parcours le long de la structure ou dans des positions prédéterminées d'un ou plusieurs parmi : l'intégrité structurelle, l'épaisseur de paroi de structure ; et facultativement l'ajustement de la force de couplage magnétique.
